# FASCICULE DE BREVET EUROPEEN

(11) **EP 0 538 531 B1**
(45) Date de publication et mention de la délivrance du brevet: **22.03.1995**
(21) Numéro de dépôt: 91402743.8
(22) Date de dépôt: 14.10.1991
(51) Int. Cl.: B29C 70/00, B29D 23/24, F16C 3/02, B29C 43/32, B29C 61/06, B29C 61/00, B29C 63/42

(54) **Procédé de fabrication d'un arbre de transmission en matériau composite et arbre fabriqué selon le procédé**
Verfahren zur Herstellung von Antriebswellen aus Verbundwerkstoff und danach hergestellte Antriebswelle
Process of producing a composite transmission shaft and shafts obtained by this process

(43) Date de publication de la demande: 28.04.1993
(73) Titulaire: GKN GLAENZER SPICER, F-78955 Carrières-sous-Poissy (FR)
(72) Inventeur: Rouillot, Michel, F-78100 Saint Germain en Laye (FR)
(74) Mandataire: Polus, Camille

(56) Documents cités:
- EP-A- 0 115 763
- FR-A- 2 582 254
- GB-A- 2 089 761
- US-A- 3 669 157
- WORLD PATENTS INDEX Section PQ, Week 7944, 25 Septembre 1979 Derwent Publications Ltd., London, GB; Class Q67, AN 79-80054B & JP-A-54 123 175 (GOSEN KK)
- PATENT ABSTRACTS OF JAPAN vol. 8, no. 148 (M-308) 11 Juillet 1984 & JP-A-59 045 117 (TOHO BESLON KK)

## Description

La présente invention concerne un procédé de fabrication d'un arbre de transmission en matériau composite du type comportant au moins une étape de réalisation d'une couche externe comportant des fibres d'armature imprégnées d'une résine durcissable par chauffage.

On connaît divers procédés de fabrication de ce type permettant notamment la réalisation d'arbres de transmission tubulaires utilisés par exemple dans l'industrie automobile.

Le document EP-A-0115763 décrit par ailleurs un procédé de fabrication d'éléments allongés de construction, selon lequel on met en place une gaine périphérique sur la couche externe, préalablement au durcissement de la résine. Ce document prévoit aussi d'entourer les éléments avec une gaine d'un matériau thermorétractable avant d'effectuer le durcissement de la résine. Mais cette gaine est ensuite éliminée et ne fait donc pas partie de l'élément fini.

Il s'est avéré souhaitable que l'état de surface extérieure d'un arbre de transmission fabriqué selon un tel procédé soit le plus régulier possible, d'une part pour conférer à l'arbre un aspect esthétique et d'autre part afin d'en améliorer la résistance au vieillissement, en particulier au phénomène dit de vieillissement humide, en y formant une couche sensiblement continue de résine. Il est également souhaitable de pouvoir ôter l'excès de résine d'imprégnation.

Afin d'atteindre ces buts, l'invention propose un procédé de fabrication comportant les caractéristiques de la revendication 1.

Selon d'autres caractéristiques de l'invention :
- on maintient un effort de tension axiale sur la gaine de manière à provoquer une rétraction radiale de la gaine autour d'une couche externe ;
- la gaine en tissu-maille est déformée élastiquement pour en augmenter le diamètre préalablement à sa mise en place sur la couche externe ;
- l'étape de mise en place comporte une étape de tricotage en rond de la gaine autour de la couche externe de l'arbre de transmission.

Un arbre de transmission tubulaire en résine synthétique armée de fibres peut être fabriqué selon divers procédés connus dans lesquels on réalise au moins une couche avec des fibres d'armatures, par exemple des fibres en carbone, imprégnées d'une résine synthétique durcissable, qui sont par exemple enroulées sous un angle d'enroulement prédéterminé autour d'un noyau ou mandrin de bobinage, l'ensemble étant ensuite durci sous l'effet de la chaleur par chauffage à une température relativement élevée, par exemple comprise entre 80 et 150°C. Cette étape de chauffage est ensuite suivie d'un refroidissement de l'ensemble jusqu'à la température ambiante.

L'invention propose de compléter un tel procédé de fabrication par la mise en place d'une gaine périphérique en tricot sur la couche externe ainsi réalisée, préalablement à l'opération de durcissement de la résine.

Par tricot au sens de l'invention, il faut comprendre une pièce fabriquée au moyen d'un seul fil entrelacé sur lui-même, ou de plusieurs fils entrelacés entre eux selon la technique de la bonnetterie dans laquelle les fils sont repliés sur eux-mêmes en forme de boucles régulières, celles-ci étant accrochées les unes dans les autres et prenant le nom de mailles.

Sous l'expression mailles on désigne donc une boucle de fil présentant généralement la forme de deux S placées symétriquement, cette forme étant maintenue à l'aide des autres boucles accrochées aux quatre courbes du fil.

Puisque le fil n'est pas disposé en ligne droite dans les mailles, mais est courbé un grand nombre de fois, cet ensemble de mailles (appelé également tissumaille) s'étire facilement en tous sens, l'élasticité du fil tendant à lui faire reprendre sa forme primitive et rendant élastique la pièce de tricot ainsi réalisée.

L'élasticité est la caractéristique la plus importante du tissu-maille ou tricot.

L'invention propose donc d'utiliser une gaine, par exemple tricotée en rond, qui s'apparente aux articles en tissu-maille utilisés dans le domaine de l'habillement tels que des chaussettes et des bas.

L'invention propose d'utiliser une gaine tricotée en fil thermoplastique, tel que par exemple un fil de polyamide, qui est choisi de manière à posséder une faculté de rétraction lorsqu'il est soumis à une température qui se situe dans la gamme de températures correspondant aux températures de la résine lors du cycle de polymérisation.

Cette caractéristique permet de combiner, lors de la mise en place de la gaine sur la couche externe, les effets "d'élasticité" dûs à sa structure de tissu-maille et dûs au phénomène de rétraction thermique du matériau thermoplastique constitutif du fil afin d'obtenir un effet de pression radiale sur la couche externe en fibres imprégnées de résine de manière à provoquer une imprégnation de la gains par la résine ainsi qu'une traversée au moins partielle de la gains par la résine pour obtenir une couche externe continue de résine à l'extérieur du tube de transmission et pour provoquer une évacuation vers l'extérieur d'un éventuel excès de résine.

Pour augmenter l'effet de pression radiale, il est possible de maintenir un effort de tension axiale sur la gaine lors du cycle de polymérisation de manière à s'opposer à l'effet de rétraction axiale de la gaine en imposant ainsi à cette dernière de se rétracter radialement, c'est-à-dire de diminuer en diamètre pour venir comprimer la couche externe.

Selon une variante il est initialement possible de déformer élastiquement la gaine tricotée dans la direction radiale pour en augmenter le diamètre, avant sa mise en place sur la couche externe, et bénéficier ainsi d'une manière encore accrue de l'effet de pression radiale sur la couche externe.

La gaine en tricot peut être réalisée, avec ou sans couture, préalablement à sa mise en place sur la couche externe ou peut, à titre de variante, être tricotée insitu en rond autour de la couche externe de l'arbre de transmission à l'aide d'un métier à tricoter circulaire traversé par l'arbre de transmission.

Dans le cas où la gaine est tricotée préalablement à sa mise en place, il est possible de la mettre en place sur la couche externe en l'amenant à l'aide d'un tube extérieur coaxial à l'arbre de transmission de diamètre supérieur ou à l'aide d'un dispositif de manipulation à déplacement rectiligne.

Le procédé selon l'invention permet de réaliser des arbres de transmission à structure composite pleins ou des arbres de transmission tubulaires qui dans les deux cas ont une surface extérieure possédant les qualités requises d'état de surface.

Le fil constitutif de la gaine est de préférence choisi de manière que l'effet de rétraction se produise à la température à laquelle la résine est la plus fluide, c'est-à-dire au cours de la première partie, dite de gélification, du cycle de polymérisation.

Le procédé n'est pas limité à la fabrication d'arbres cylindriques à section circulaire constante, mais s'applique également aux arbres de sections noncirculaires et variables sur leur longueur.

## Revendications

1. Procédé de fabrication d'un arbre de transmission en matériau composite comportant au moins une étape de réalisation d'une couche externe comportant des fibres d'armatures imprégnées d'une résine durcissable par chauffage, selon lequel une gaine périphérique est mise en place sur la couche externe préalablement au durcissement de la résine, caractérisé en ce que la gaine périphérique est réalisée en tissu-maille, c'est-à-dire formé de boucles de fil accrochées les unes aux autres et possédant une grande élasticité, le fil étant réalisé en un matériau possédant une faculté de rétraction lorsqu'il est soumis à une température qui se situe dans la gamme de températures de polymérisation de la résine ; en ce que sous l'effet de l'élasticité et de la rétraction de la gaine, au moins une partie de la résine traverse la gaine, vers l'extérieur ; et en ce que la gaine et la couche de résine extérieure subsistent après durcissement et constituent les couches externes de l'arbre.

2. Procédé de fabrication selon la revendication 1, caractérisé en ce que l'on maintient un effort de tension axiale sur la gaine de manière à provoquer une rétraction radiale de la gaine autour de la couche externe.

3. Procédé de fabrication selon l'une quelconque des revendications précédentes, caractérisé en ce que la gaine en tissu-maille est déformée élastiquement pour en augmenter le diamètre préalablement à sa mise en place sur la couche externe.

4. Procédé de fabrication selon l'une quelconque des revendications précédentes, caractérisé en ce que l'étape de mise en place de la gaine comporte une étape de tricotage en rond de la gaine autour de la couche externe de l'arbre de transmission.

## Claims

1. Method of manufacturing a transmission shaft from composite material, comprising at least one step of producing an external coating having reinforcing fibres impregnated with a thermosetting resin, according to which a peripheral sleeve is put in place on the external coating prior to the setting of the resin, characterised in that the peripheral sleeve is produced from mesh fabric, that is to say formed by loops of thread linked with one another and having a high elasticity, the thread being made from a material having a capacity for retraction when it is subjected to a temperature within the range of temperatures of polymerisation of the resin; that under the effect of the elasticity and of the retraction of the sleeve at least a part of the resin passes through the sleeve towards the exterior; and that the sleeve and the outer coating of resin subsist after setting and constitute the external coatings of the shaft.

2. Method of manufacture as claimed in Claim 1, characterised in that an axial tensional force is maintained on the sleeve in such a way as to cause a radial retraction of the sleeve around the external coating.

3. Method of manufacture as claimed in any one of the preceding claims, characterised in that the sleeve made from mesh fabric is deformed elastically in order to increase the diameter thereof before it is put in place on the external coating.

4. Method of manufacture as claimed in any one of the preceding claims, characterised in that the step of putting the sleeve in place comprises a step of circular knitting of the sleeve around the external coating of the transmission shaft.

## Patentansprüche

1. Verfahren zur Herstellung einer Antriebswelle aus Verbundwerkstoff mit wenigstens einem Schritt der Ausbildung einer äußeren Schicht mit Verstärkungsfasern, die mit einem durch Erhitzen härtbaren Harz imprägniert sind, bei dem auf der äußeren Schicht vor dem Aushärten des Harzes eine Ummantelung angebracht wird, dadurch gekennzeichnet, daß die Ummantelung aus Wirkware hergestellt wird, das heißt, aus Fadenschlingen gebildet wird, die miteinander verhakt sind und eine große Elastizität besitzen, wobei der Faden aus einem Material hergestellt wird, das eine Retraktionsfähigkeit besitzt, wenn es einer Temperatur ausgesetzt wird, die sich im Bereich der Polymerisationstemperaturen des Harzes befindet, und daß unter der Wirkung der Elastizität und der Retraktion der Ummantelung wenigstens ein Teil des Harzes die Ummantelung nach außen durchdringt und daß die Ummantelung und die äußere Harzschicht nach dem Aushärten bestehen bleiben und die äußeren Schichten der Welle bilden.

2. Herstellungsverfahren nach Anspruch 1, dadurch gekennzeichnet, daß man eine axiale Zugkraft auf die Ummantelung ausübt, um eine radiale Schrumpfung der Ummantelung um die äußere Schicht zu bewirken.

3. Herstellungsverfahren nach einem der vorstehenden Ansprüche, dadurch gekennzeichnet, daß die Ummantelung aus Wirkware vor ihrer Anbringung auf der äußeren Schicht elastisch verformt wird, um ihren Durchmesser zu vergrößern.

4. Herstellungsverfahren nach einem der vorstehenden Ansprüche, dadurch gekennzeichnet, daß der Schritt der Anbringung der Ummantelung einen Schritt des Rundstrickens der Ummantelung um die äußere Schicht der Antriebswelle herum einschließt.
